(19) Europäisches Patentamt
European Patent Office
Office européen des brevets

(11) **EP 4 711 186 A1**

(12) **EUROPÄISCHE PATENTANMELDUNG**

(43) Veröffentlichungstag:
**18.03.2026   Patentblatt 2026/12**

(21) Anmeldenummer: **25191153.3**

(22) Anmeldetag: **23.07.2025**

(51) Internationale Patentklassifikation (IPC):
**B60L 50/53** (2019.01)     **B60L 53/62** (2019.01)
**B60L 53/63** (2019.01)     **B60L 53/65** (2019.01)
**H02J 3/17** (2026.01)     **H02J 13/13** (2026.01)
**H02J 7/40** (2026.01)

(52) Gemeinsame Patentklassifikation (CPC):
**B60L 53/62; B60L 50/53; B60L 53/63; B60L 53/65;
H02J 3/17; H02J 7/40; H02J 13/1315;
B60L 2200/26**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **11.09.2024   DE 102024208657**

(71) Anmelder: **Siemens Mobility GmbH
80997 München (DE)**

(72) Erfinder:
• **Hassler, Stefan
91281 Kirchenthumbach, OT Neuzirkendorf (DE)**
• **Probst, Sebastian
90408 Nürnberg (DE)**

(74) Vertreter: **Siemens Patent Attorneys
Postfach 22 16 34
80506 München (DE)**

(54) **LEISTUNGSMODULATIONSBASIERTES LADEN EINER BATTERIE EINES SCHIENENFAHRZEUGS**

(57)     Die vorliegende Erfindung betrifft ein Verfahren (100; 200) zum Laden zumindest einer Batterie (22) eines Schienenfahrzeugs (20; 40) an einer Ladestation (10) sowie ein Schienenfahrzeug (20; 40) und ein System (50). Bei dem Verfahren (100) wird das Schienenfahrzeug (20) mit einem Ladestromnetz (12) der Ladestation (10) elektrisch verbunden (S1). Zudem wird eine Frequenzanalyse im Ladestromnetz (12) durchgeführt (S2) und ein Ladeleistungsniveau (P_L) auf Grundlage der Frequenzanalyse festgelegt (S3). Schließlich wird die Batterie (22) mit einer Ladeleistung (P_N) geladen (S4), die sich im Wesentlichen auf dem festgelegten Ladeleistungsniveau (P_L) befindet.

FIG 2

**Beschreibung**

Die vorliegende Erfindung betrifft ein Verfahren zum Laden einer Batterie eines Schienenfahrzeugs an einer Ladestation sowie ein Schienenfahrzeug und ein System.

Zum Befahren von nicht elektrifizierten Gleisen sind Batterie- oder batteriehybride Schienenfahrzeuge wie insbesondere Triebzüge für die Personenbeförderung im Regionalverkehr bekannt. Solche batteriehybride Schienenfahrzeuge können sowohl mittels Stromabnehmern unter einer Oberleitung eines streckenseitigen Versorgungsnetzes fahren als auch im reinen Batteriebetrieb auf nicht elektrifizierten Streckenabschnitten. Dabei ist es gelegentlich notwendig, die eine oder mehreren Antriebs- bzw. Traktionsbatterien des Schienenfahrzeugs wieder zu laden. Soll ein solches Aufladen in einem nicht elektrifizierten Streckenabschnitt oder beispielsweise an einer Endhaltestelle erfolgen, können dedizierte Ladestationen vorgesehen werden. Solche auch als "Ladeinseln" bezeichneten Ladestationen stellen einen kurzen Oberleitungsabschnitt bereit, über den sich dann auch gleichzeitig mehrere Züge laden lassen.

Ladestationen sind oft in Gebieten vorgesehen, die weitab von Hochleistungs-Hochspannungstrassen liegen. Die elektrische Versorgung dieser Ladestationen erfolgt daher meist aus Ortsnetzen über einen Transformator. Solche Ortsnetze können üblicherweise aber nur eine im Vergleich zur maximalen Ladeleistung der Traktionsbatterien kleine elektrische Leistung bereitstellen. Infolgedessen ist es oftmals erforderlich, die tatsächliche Ladeleistung eines an der Ladeinsel ladenden Schienenfahrzeugs aktiv zu begrenzen. Laden mehrere Schienenfahrzeugs parallel bzw. gleichzeitig an der Ladestation, so muss die vom Netztransformator der Ladestation bereitstellbare Leistung zwischen diesen Schienenfahrzeugen aufgeteilt werden.

Vor diesem Hintergrund ist es eine Aufgabe der vorliegenden Erfindung, den Ladevorgang an einer Ladestation zu verbessern, insbesondere eine situationsabhängige und/oder individuelle Begrenzung der Ladeleistung zu ermöglichen.

Diese Aufgabe wird gelöst durch Verfahren zum Laden einer Batterie eines Schienenfahrzeugs an einer Ladestation, Schienenfahrzeuge sowie durch ein System mit den jeweiligen Merkmalen der unabhängigen Patentansprüche.

Weiterbildungen der Erfindung sind in abhängigen Patentansprüchen angegeben.

Gemäß einem ersten Aspekt der Erfindung wird bei dem Verfahren zum Laden zumindest einer Batterie eines Schienenfahrzeugs an einer Ladestation das Schienenfahrzeug mit einem Ladestromnetz der Ladestation elektrisch verbunden. Zudem wird eine Frequenzanalyse im Ladestromnetz durchgeführt und ein Ladeleistungsniveau auf Grundlage der Frequenzanalyse festgelegt. Schließlich wird die Batterie mit einer Ladeleistung geladen, die sich im Wesentlichen auf dem festgelegten Ladeleistungsniveau befindet.

Eine Frequenzanalyse im Sinne der Erfindung ist vorzugsweise die Analyse eines Frequenzspektrums, d. h. einer Vielzahl an Frequenzen, im Ladestromnetz. Bei der Frequenzanalyse können beispielsweise die Fluktuationen der elektrischen Leistung, die über das Ladestromnetz an einem Schienenfahrzeug bereitgestellt wird, insbesondere kleine Fluktuationen der Netzspannung, analysiert werden. Die Frequenzanalyse kann zum Beispiel mittels einer Fourier-Analyse der Ladeleistung bzw. der Netzspannung erfolgen.

Ein Aspekt der Erfindung beruht auf dem Ansatz, ein Schienenfahrzeug mit einer Ladeleistung zu laden, die vom Ergebnis einer vorangehenden Frequenzanalyse in einem Ladestromnetz abhängt. Dabei lässt sich ausnutzen, dass die im Ladestromnetz auftretenden Frequenzen von gegenwärtiger Belastung des Ladestromnetzes abhängen oder zweckmäßigerweise sogar gezielt aufgeprägt worden sein können. Auf Grundlage der ermittelten Frequenzen und/oder Frequenzänderungen kann so ein Ladeleistungsniveau für das Schienenfahrzeug dynamisch festgelegt werden. Insbesondere kann das Ladeleistungsniveau situativ und flexibel festgelegt werden. So lässt sich beispielsweise das gleichzeitige Laden anderer Schienenfahrzeuge, die ebenfalls einen Teil der im Ladestromnetz bereitgestellten Leistung beanspruchen, berücksichtigen.

Durch die Frequenzanalyse kann eine Information empfangen oder zumindest abgeleitet werden. Beispielsweise lässt sich durch die Frequenzanalyse ermitteln, wie viele andere Schienenfahrzeuge an die Ladestation angeschlossen, d. h. elektrisch mit dem Ladestromnetz verbunden, sind bzw. aktuell einen Ladestrom aus dem Ladestromnetz beziehen. Dies kann entsprechend beim Laden der Batterie des Schienenfahrzeugs berücksichtigt werden.

Entsprechend charakterisiert das festgelegte Ladeleistungsniveau zweckmäßigerweise eine Ladeleistung, bei der keine Überlastung des Ladestromnetzes droht.

Das Schienenfahrzeug bzw. dessen Batterie kann dabei grundsätzlich mit einer dem Ladeleistungsniveau entsprechenden, konstanten Ladeleistung geladen werden. Vorzugsweise wird die Batterie jedoch mit einer modulierten Ladeleistung geladen, die um das Ladeleistungsniveau fluktuiert, wie im Zusammenhang mit dem zweiten Aspekt der Erfindung erläutert wird. Die Batterie kann beispielsweise mit einer Ladeleistung geladen werden, die mit einer Amplitude von ca. 1 bis 2 % des Ladeleistungsniveaus um das Ladeleistungsniveau schwankt.

Allgemein gesprochen ermöglicht die Frequenzanalyse im Ladestromnetz, insbesondere der abrufbaren oder abgerufenen Leistung bzw. der Netzspannung, also ein Empfangen von Signalen. Die Frequenzanalyse ermöglicht infolgedessen eine Kommunikation des Schienenfahrzeugs bzw. mehrerer Schienenfahrzeuge über das Ladestromnetz, z. B. über eine Oberleitung der Ladestation. Beispielsweise kann das Schienenfahrzeug derart mit anderen, an das Ladestromnetz angeschlossenen Schienenfahrzeugen oder der Ladestation selbst kommunizieren.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer Ausführungsform werden bei der Frequenzanalyse, insbesondere vorbestimmte, Modulationsfrequenzen innerhalb des Ladestromnetzes ermittelt. Die Festlegung des Ladeleistungsniveaus erfolgt vorzugsweise auf Grundlage der ermittelten Modulationsfrequenzen.

Zweckmäßigerweise werden dabei Frequenzen ermittelt, mit denen die Leistung bzw. die Spannung im Ladestromnetz von anderen Schienenfahrzeugen oder von der Ladestation selbst gezielt moduliert wird. Dabei können einzelne Modulationsfrequenzen einzelnen Schienenfahrzeugen zugeordnet sein oder werden. Anders gesagt kann jedem Schienenfahrzeug eine individuelle, vorbestimmte Modulationsfrequenz zugeordnet sein, anhand der das Schienenfahrzeug identifizierbar ist. Durch die Frequenzanalyse, d. h. die Ermittlung der Modulationsfrequenzen innerhalb des Ladestromnetzes, können so andere, ebenfalls an das Ladestromnetz angeschlossene bzw. gegenwärtig ladende Schienenfahrzeuge identifiziert und z. B. abgezählt werden. Die Anwesenheit bzw. der Ladevorgang dieser anderen Schienenfahrzeuge kann dann beim Laden der Batterie die Frequenzanalyse durchführenden Schienenfahrzeugs berücksichtigt werden.

In einer weiteren Ausführungsform wird eine Anzahl an Modulationsfrequenzen im Ladestromnetz ermittelt. Das Ladeleistungsniveau wird dann vorzugsweise festgelegt, indem eine vorbestimmte Lade-Maximalleistung der Ladestation durch eine Zahl dividiert wird, die auf der Anzahl der ermittelten Modulationsfrequenzen basiert.

Beispielsweise kann die Lade-Maximalleistung durch eine Zahl dividiert werden, die um eins größer ist als die Anzahl der Modulationsfrequenzen, d. h. beispielsweise $P\_L = P\_{max} / (n + 1)$, mit $P\_L$ = Ladeleistungsniveau, $P\_{max}$ = Lade-Maximalleistung der Ladestation und n = Anzahl der ermittelten Modulationsfrequenzen bzw. Anzahl der anderen, gegenwärtig ebenfalls ladenden bzw. mit dem Ladestromnetz verbundenen Schienenfahrzeuge.

Dadurch kann die verfügbare Leistung der Ladestation gezielt, insbesondere gleichmäßig, unter allen Schienenfahrzeugen aufgeteilt werden, die elektrisch mit dem Ladestromnetz verbunden sind. So kann das Überschreiten der beispielsweise durch ein Ortsnetz, über welches die Ladestation versorgt wird, vorgegebenen Lade-Maximalleistung verhindert werden.

In einer weiteren Ausführungsform werden beim Durchführen der Frequenzanalyse die Frequenzen von Spannungsschwankungen im Ladestromnetz ermittelt.

Vorzugsweise werden dabei Spitzen im Frequenzspektrum oberhalb und unterhalb der Netzfrequenz ermittelt, die auch als Seitenbänder der Netzfrequenz bezeichnet werden können. Dabei kann davon ausgegangen werden, dass regelmäßige Schwankungen der Spannung in diesen Frequenzbändern künstlich durch Modulation erzeugt werden. Aus den Spannungsschwankungen können so (Kommunikations-) Signale anderer Schienenfahrzeuge und/oder der Ladestation selbst herausgefiltert werden.

Zweckmäßigerweise wird bei der Frequenzanalyse auch eine zeitliche Änderung des Frequenzspektrums im Ladestromnetz überwacht. Die zeitliche Änderung kann ausgewertet und damit eine Information aus dem Frequenzspektrum extrahiert werden, die über das bloße Vorliegen bestimmter Modulationsfrequenzen hinausgeht.

Entsprechend wird in einer weiteren Ausführungsform dem Festlegen des Ladeleistungsniveaus eine Ladeinformation zugrunde gelegt, welche auf Grundlage einer zeitlichen Änderung des Frequenzspektrums im Ladestromnetz ermittelt wird.

So kann Information, beispielsweise durch Frequenzumtastung (Englisch "Frequency Shift Keying"), im Ladestromnetz bereitgestellt bzw. darüber empfangen werden. Die Frequenzumtastung kann von der Ladestation selbst oder von anderen Schienenfahrzeugen vorgenommen werden. Infolgedessen lassen sich ganze Nachrichten mit zusätzlicher Information, etwa betreffend die gegenwärtige Ladesituation an der Ladestation oder Ladepläne der anderen Schienenfahrzeuge, über das Ladestromnetz übertragen bzw. senden und empfangen. Diese Information kann bei der Festlegung des Ladeleistungsniveaus berücksichtigt werden.

Beispielsweise kann die Ladestation eine Ladeleistung individuell und situationsabhängig zuteilen, insbesondere gemäß einem Ladeplan eines Schienenfahrzeugs.

In einer weiteren Ausführungsform enthält die Ladeinformation daher ein dem Schienenfahrzeug von der Ladestation zugeteiltes Ladeleistungsniveau.

So kann das Schienenfahrzeug bzw. dessen zumindest eine Batterie bevorzugt mit einer höheren Ladeleistung geladen werden, wenn dessen Batterie einen sehr niedrigen Ladezustand (Englisch "State Of Charge", abgekürzt SOC) aufweist oder nur eine kurze Ladezeit für dieses Schienenfahrzeug zur Verfügung steht. Umgekehrt kann das Schienenfahrzeug mit einer geringeren Ladeleistung geladen werden, wenn die Batterie bereits einen hohen Ladezustand aufweist oder das Schienenfahrzeug voraussichtlich für längere Zeit mit dem Ladestromnetz verbunden bleiben kann.

Alternativ oder zusätzlich können auch von anderen Schienenfahrzeugen bereitgestellte Informationen bei der Festlegung des Ladeleistungsniveaus berücksichtigt werden. Beispielsweise ist denkbar, dass das Schienenfahrzeug selbständig ein Ladeleistungsniveau festlegt, welches z. B. die Ladepläne oder die Batteriefüllstände der anderen Schienenfahrzeuge berücksichtigt.

In einer weiteren Ausführungsform enthält die Ladeinformation entsprechend einen Ladezustand zumindest eines anderen, elektrisch mit dem Ladestromnetz verbundenen Schienenfahrzeugs.

Unter einem Ladezustand kann dabei insbesondere ergänzend eine Information verstanden werden, die das Laden des betreffenden Schienenfahrzeugs betrifft und/oder charakterisiert, beispielsweise einen Ladeplan, einen aktuellen Ladestrom und/oder eine Leerlaufspannung.

Dadurch kann das Schienenfahrzeug etwa mit einer geringeren Ladeleistung geladen werden, wenn seine Batterie voller ist bzw. einen höheren Ladezustand aufweist als die eines anderen Schienenfahrzeugs oder länger mit dem Ladestromnetz verbunden bleiben kann als dieses andere Schienenfahrzeug. Umgekehrt kann das Schienenfahrzeug bevorzugt, d. h. mit höherer Ladeleistung, geladen werden, wenn seine Batterie leerer ist als die des anderen Schienenfahrzeugs oder wenn es nicht so lang mit dem Ladestromnetz verbunden bleiben kann wie dieses andere Schienenfahrzeug.

Gemäß einem zweiten Aspekt der Erfindung wird bei dem Verfahren zum Laden einer Batterie eines Schienenfahrzeugs an einer Ladestation das Schienenfahrzeug elektrisch mit einem Ladestromnetz der Ladestation verbunden. Zudem wird ein Ladeleistungsniveau festgelegt und eine sich im Wesentlichen auf dem Ladeleistungsniveau befindliche Ladeleistung mit wenigstens einer vorbestimmten Frequenz moduliert. Die Batterie wird mit der modulierten Ladeleistung geladen.

Die vorbestimmte Frequenz entspricht dabei vorzugsweise einer dem Schienenfahrzeug zugeordneten Frequenz und ist damit schienenfahrzeugspezifisch. Zweckmäßigerweise dient die vorbestimmte Frequenz entsprechend der Identifikation des Schienenfahrzeugs. Insbesondere kann sich das Schienenfahrzeug von anderen Schienenfahrzeugen bezüglich seiner vorbestimmten Frequenz unterscheiden. Die vorbestimmte Frequenz ist zweckmäßigerweise kleiner als die Netzfrequenz des Ladestromnetzes, sodass die Modulation als Seitenbänder der Netzfrequenz im Ladestromnetz auftreten kann.

Durch die Modulation der dem Ladeleistungsniveau entsprechenden Ladeleistung kann das Schienenfahrzeug Information in das Ladestromnetz einspeisen. Das Schienenfahrzeug kann so insbesondere über das Ladestromnetz kommunizieren, etwa mit anderen Schienenfahrzeugen und/oder mit der Ladestation, ohne dass eine zusätzliche Kommunikationsinfrastruktur notwendig ist. Indem das Schienenfahrzeug die Ladeleistung mit der vorbestimmten Frequenz moduliert, kann sich das Schienenfahrzeugen im Ladestromnetz "Anmelden" bzw. anderen Schienenfahrzeugen und/oder der Ladestation signalisieren, dass es ebenfalls mit dem Ladestromnetz elektrisch verbunden ist und/oder seine Batterie mit Leistung aus dem Ladestromnetz lädt.

Die Modulation der Ladeleistung mit der vorbestimmten Frequenz kann beispielsweise sinusförmig erfolgen, etwa gemäß der Formel $I\_N = I\_L + I\_M \cdot \sin(2 \cdot \pi \cdot f)$ mit $I\_N$ = (modulierter bzw. tatsächlicher) Ladestrom an der Batterie, $I\_L$ = konstanter Ladestromanteil, $I\_M$ = zur Kommunikation aufmodulierter Strom und $f$ = vorbestimmte Frequenz. Es wird hierbei von zumindest näherungsweise konstanter Spannung an der Batterie ausgegangen, sodass die bezeichneten Ströme als proportional zu einer jeweiligen Leistung angenommen werden können. $I\_N$ kann folglich mit der tatsächlichen (modulierten) Ladeleistung und $I\_L$ mit dem festgelegten Ladeleistungsniveau $P\_L$ korrespondieren. $I\_M$ korrespondiert indes mit einer aufmodulierten Leistung, die zweckmäßigerweise maximal etwa 4 Promille, vorzugsweise maximal 2 Promille, des Ladeleistungsniveaus $P\_L$ beträgt. Die aufmodulierte Leistung kann z. B. zwischen 1 Promille und 2 Promille des Ladeleistungsniveaus betragen, wodurch die dadurch erzeugten Lastspitzen im Ladestromnetz vernachlässigbar sind und die Netzstabilität nicht gefährden.

Grundsätzlich sollte die Modulation so klein wie möglich sein, jedoch so hoch, dass sich die Modulation zuverlässig detektieren lässt. Bei Störstrommessungen können (hochfrequente) Ströme im Bereich von 100 mA mit engen Bandpassfiltern gemessen werden. Dies kann als Richtschnur herangezogen werden. Im Ladestromnetz einer Ladestation für Schienenfahrzeuge kann davon ausgegangen werden, dass ca. 1 kVA Schein- bzw. Modulationsleistung zuverlässig und robust detektierbar sind.

Die Modulation der Ladeleistung bzw. des Ladestroms überträgt sich in das Ladestromnetz. Denn jede Leistungs- bzw. Stromentnahme aus dem Ladestromnetz, z. B. einer Oberleitung der Ladestation, hat einen Einfluss auf die Netz- bzw. Oberleitungsspannung aufgrund von sekundären Streuinduktivitäten und einem sekundären Widerstand des Ladestromnetzes. Diese Streuinduktivitäten und der Sekundärwiderstand werden beispielsweise durch die Leitungsführung, Bauteile der Leitung und insbesondere den Netztransformator, über den das Ladestromnetz beispielsweise an ein Ortsnetz angeschlossen ist, gebildet. Mithin weist auch der Transformator des Schienenfahrzeugs eine Streuinduktivität auf.

Eine Modulation des Ladestroms der Batterie, beispielsweise durch einen den Ladestrom steuernden DC/DC-Steller des Schienenfahrzeugs, wird aufgrund der Rückwirkung über den Transformator des Schienenfahrzeugs bzw. dessen Streuinduktivität eine Spannungsmodulation im Ladestromnetz bewirken oder die Netzspannung zumindest in charakteristischer Weise beeinflussen. Dies kann, wie vorstehend erläutert, von anderen Schienenfahrzeugen genutzt werden, um das den Ladestrom modulierende Schienenfahrzeug zu identifizieren.

In einer Ausführungsform des Verfahrens gemäß dem zweiten Aspekt der Erfindung wird die Ladeleistung derart moduliert, dass eine Information betreffend eine Identität des Schienenfahrzeugs, einen Ladeplan des Schienenfahrzeugs, insbesondere eine maximale Ladedauer, einen Ladezustand und/oder eine benötigte Mindestenergiemenge im Ladestromnetz bereitgestellt wird.

Zu diesem Zweck kann die Ladeleistung beispielsweise gemäß einem Verfahren zur Frequenzumtastung moduliert werden, etwa um Bitfolgen abzubilden und dem Ladestromnetz damit eine Nachricht bzw. Information aufzuprägen. Die Ladestation und/oder andere Schienenfahrzeuge können so die Ladeleistung bedarfsgerecht bzw. situationsabhängig einstellen bzw. verteilen. Zum Beispiel kann ein Fahrzeug mit leerer Batterie oder nur einem planmäßig kurzen Aufenthalt an der Ladestation priorisiert, d. h. mit höherer Ladeleistung, geladen werden, während ein anderes Schienenfahrzeug mit voller Batterie und/oder einer planmäßig langen Aufenthaltsdauer an der Ladestation mit einer geringeren Ladeleistung geladen wird.

Die Verfahren gemäß dem ersten und dem zweiten Aspekt der Erfindung stehen miteinander in Beziehung. Insbesondere stellen beide Verfahren zusammengenommen sicher, dass eine Kommunikation über das Ladestromnetz, zum Beispiel zwischen zwei Schienenfahrzeugen und/oder zwischen einem Schienenfahrzeug und der Ladestation, erfolgen kann. Das Verfahren gemäß dem ersten Aspekt der Erfindung bildet dabei die Empfängerseite der Kommunikation ab, während das Verfahren gemäß dem zweiten Aspekt der Erfindung die Senderseite der Kommunikation abbildet. Insofern sind die beiden Verfahren untereinander in der Weise verbunden, dass sie eine einzige allgemeine erfinderische Idee verwirklichen, in Analogie zu einem Sender und einem Empfänger oder einem Stecker und der entsprechenden Steckdose. Beide Verfahren stützen sich auf eine Modulation der Spannung im Ladestromnetz. Im einen Fall wird die Modulation analysiert ("empfangen"), im anderen Fall wird die Modulation erzeugt ("senden").

Gemäß einem dritten Aspekt der Erfindung umfasst ein Schienenfahrzeug: i) zumindest eine Batterie, ii) einen Netzanschluss zum Verbinden des Schienenfahrzeugs mit einem Ladestromnetz einer Ladestation, iii) eine Wandleranordnung, welche den Netzanschluss mit der Batterie elektrisch koppelt und zum Bereitstellen einer Ladeleistung für die Batterie eingerichtet ist, und iv) eine Steuerungsvorrichtung, die dazu eingerichtet ist, eine Frequenzanalyse im Ladestromnetz durchzuführen, auf Grundlage der Frequenzanalyse ein Ladeleistungsniveau festzulegen und die Batterie mit einer Ladeleistung, die sich im Wesentlichen auf dem festgelegten Ladeleistungsniveau befindet, zu laden.

Beispielsweise kann eine Spannungsmessung am Netzanschluss, z. B. an einem Stromabnehmer des Schienenfahrzeugs, vorgenommen werden. Die Steuerungsvorrichtung ist dann zweckmäßigerweise dazu eingerichtet, die am Netzanschluss gemessene Spannung zu analysieren. Die Steuerungsvorrichtung kann so zum Beispiel regelmäßige Schwankungen der Netzspannung und deren Frequenzen erfassen. Insbesondere kann die Steuerungsvorrichtung eine Fourier-Analyse der gemessenen Spannung durchführen.

Zum Laden der Batterie kann dann die Wandleranordnung, insbesondere ein Gleichspannungssteller bzw. DC/DC-Steller der Wandleranordnung, entsprechend durch die Steuerungsvorrichtung angesteuert werden.

Durch die Frequenzanalyse und das daraufhin erfolgende Festlegen des Ladeleistungsniveaus kann die Präsenz anderer Schienenfahrzeuge an der Ladestation bzw. in dem Ladestromnetz, insbesondere der Ladevorgang anderer Schienenfahrzeuge, erkannt und berücksichtigt werden. Mittels der Frequenzanalyse kann somit eine Information von anderen Schienenfahrzeugen und/oder von der Ladestation empfangen werden.

Gemäß einem vierten Aspekt der Erfindung umfasst ein Schienenfahrzeug: i) zumindest eine Batterie, ii) einen Netzanschluss zum Verbinden des Schienenfahrzeugs mit einem Ladestromnetz einer Ladestation, iii) eine Wandleranordnung, welche den Netzanschluss mit der Batterie elektrisch koppelt und zum Bereitstellen einer Ladeleistung für die Batterie eingerichtet ist, und iv) eine Steuerungsvorrichtung, die dazu eingerichtet ist, ein Ladeleistungsniveau festzulegen und eine sich im Wesentlichen auf dem Ladeleistungsniveau befindliche Ladeleistung mit wenigstens einer vorbestimmten Frequenz zu modulieren.

Die Steuerungsvorrichtung kann zum Beispiel dazu eingerichtet sein, die Wandleranordnung, insbesondere den DC/DC-Steller bzw. dessen Leistungshalbleiterschalter, entsprechend anzusteuern. Die vorbestimmte Frequenz ist, wie voranstehend erläutert, vorzugsweise schienenfahrzeugspezifisch. Infolgedessen lässt sich das Schienenfahrzeug mittels der vorbestimmten Frequenz im Ladestromnetz identifizieren. Durch die Modulation mit der vorbestimmten Frequenz kann sich das Schienenfahrzeug entsprechend im Ladestromnetz "anmelden". Darüber hinaus ist es auch möglich, durch die Modulation der Ladeleistung komplexere Information über das Ladestromnetz bereitzustellen, z. B. indem durch eine Frequenzumtastung entsprechende Bitfolgen abgebildet werden. So kann das Schienenfahrzeug andere Schienenfahrzeuge, die ebenfalls an das Ladestromnetz angeschlossen sind, und/oder die Ladestation selbst über den Lade- und/oder Fahrzeugzustand informieren.

Analog zum Verfahren gemäß dem ersten Aspekt der Erfindung und dem Verfahren gemäß dem zweiten Aspekt der Erfindung stehen auch die Schienenfahrzeuge gemäß dem dritten und dem vierten Aspekt der Erfindung miteinander in Beziehung. Insofern sind auch die beiden Schienenfahrzeuge untereinander in der Weise verbunden, dass sie eine einzige allgemeine erfinderische Idee verwirklichen. In dem Schienenfahrzeug gemäß dem dritten Aspekt der Erfindung ist die Steuerungsvorrichtung demnach so ausgebildet, dass sie einen Empfänger verkörpert, während sie in dem Schienenfahrzeug gemäß dem vierten Aspekt der Erfindung so ausgebildet ist, dass sie einen Sender verkörpert.

Die Steuerungsvorrichtung kann hard- und/oder softwaretechnisch ausgebildet sein. Die Steuerungsvorrichtung kann insbesondere eine, vorzugsweise mit einem Speicher- und/oder Bussystem daten- bzw. signalverbundene, Verarbeitungseinheit aufweisen. Beispielsweise kann die Steuerungsvorrichtung eine Mikroprozessoreinheit (CPU) oder ein Modul einer solchen und/oder ein oder mehrere Programme oder Programmmodule aufweisen. Die Steuerungsvorrichtung kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren zumindest teilweise verkörpert bzw. auszuführen imstande ist, sodass die Steuerungsvorrichtung zumindest einen Teil der Schritte solcher Verfahren ausführen kann und damit insbesondere eine Batterie eines Schienenfahrzeugs an einer Ladestation laden kann, vorzugsweise unter Kommunikation über das Ladestromnetz mit wenigstens einem anderen Schienenfahrzeug und/oder der Ladestation.

Gemäß einem fünften Aspekt der Erfindung umfasst ein System eine Ladestation und ein Fahrzeug gemäß dem dritten Aspekt der Erfindung oder dem vierten Aspekt. Die Ladestation ist zweckmäßigerweise dazu eingerichtet, eine Frequenzanalyse in einem Ladestromnetz der Ladestation durchzuführen und/oder eine Netzspannung des Ladestromnetzes mit wenigstens einer vorbestimmten Frequenz zu modulieren. Die Ladestation kann entsprechend als "smarte" Ladestation ausgebildet sein, die mit den mit dem Ladestromnetz verbundenen Schienenfahrzeugen kommunizieren oder der Kommunikation zwischen den Schienenfahrzeugen jedenfalls folgen kann. Beispielsweise kann die Ladestation den Zustand der verbundenen Schienenfahrzeuge erkennen und gegebenenfalls Ladeinformation für ein ausgewähltes Schienenfahrzeug über das Ladestromnetz senden. Dadurch kann es Laden dynamisch und situationsabhängig gesteuert bzw. die Ladeleistung entsprechend verteilt werden.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Patentanspruchs kombiniert werden.

Es zeigen:

FIG 1    ein mit einem Ladestromnetz einer Ladestation verbundenes Schienenfahrzeug,

FIG 2    ein Verfahren zum Laden einer Batterie eines Schienenfahrzeugs, und

FIG 3    ein System mit einer Ladestation und einem Schienenfahrzeug.

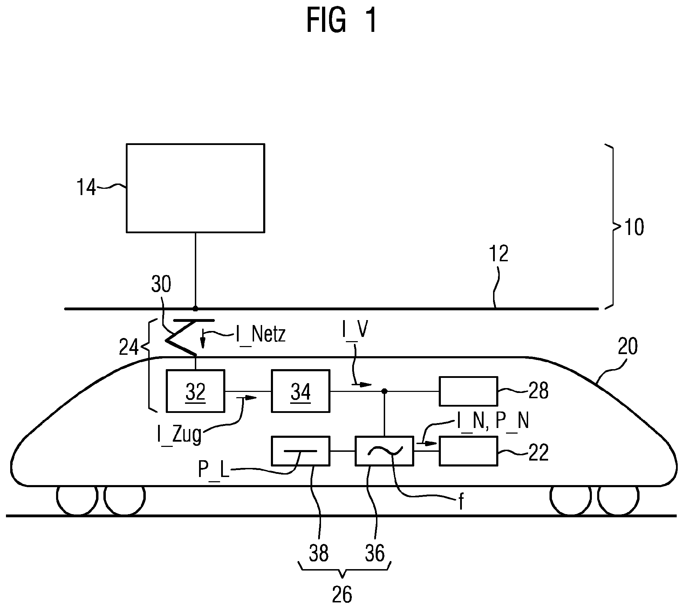

FIG 1 zeigt ein Beispiel eines mit einem Ladestromnetz 12 einer Ladestation 10 verbundenen Schienenfahrzeugs 20. Die Ladestation 10 umfasst einen Netztransformator 14, der an ein externes Stromnetz, zum Beispiel ein Ortsnetz, angeschlossen sein kann und einen Oberleitungsabschnitt, der das Ladestromnetz 12 verkörpert, elektrisch versorgt. Das Schienenfahrzeug 20 ist als batteriehybrides Schienenfahrzeug ausgebildet, dessen nicht dargestelltes Antriebssystem sowohl über den Netzanschluss 24 aus einer Oberleitung als auch durch eine oder mehrere Batterien 22 bzw. Antriebsbatterien mit elektrischer Energie versorgt werden kann. Daher weist das Schienenfahrzeug 20 einen Wechselrichter 28, z. B. einen Pulswechselrichter, auf, welcher die von einem Gleichrichter 34 oder der Batterie 22 bereitgestellte Gleichspannung zur Speisung nicht dargestellter Antriebsmotoren in Drehgestellen des Schienenfahrzeugs bedarfsgerecht umrichten kann.

Die Batterie 22 ist über den Gleichrichter 34 und einen DC/DC-Steller 36 ebenfalls elektrisch mit dem Netzanschluss 24 gekoppelt. Zusammen bilden der Gleichrichter 34, z. B. ein Vierquadrantensteller, und der DC/DC-Steller 36 eine Wandleranordnung 26. Die Wandleranordnung 26, insbesondere der DC/DC-Steller 36 bzw. dessen Leistungshalbleiterschalter, ist durch eine Steuerungsvorrichtung 38 steuerbar.

Der Netzanschluss 24 umfasst einen Stromabnehmer 30 und einen Zugtransformator 32, mit dem eine Netzspannung des Ladestromnetzes 12 auf eine Zugspannung heruntertransformiert werden kann, bevor sie von dem Gleichrichter 34 in die Gleichspannung gewandelt wird.

Über den Netzanschluss 24, insbesondere über den Stromabnehmer 30, kann das Schienenfahrzeug 20 einen Netzstrom I_Netz aus dem Ladestromnetz 12 aufnehmen. Mittels des Zugtransformators 32 lässt sich dieser Netzstrom I_Netz in einen Zugstrom I_Zug umwandeln. Da das Ladestromnetz 12 zweckmäßigerweise mit einer hohen Wechselspannung, beispielsweise 25 kV bei 50 Hz oder 15 kV bei 16,7 Hz, betrieben wird, handelt es sich bei dem abgegriffenen Netzstrom I_Netz und dem korrespondierenden Zugstrom I_Zug jeweils um Wechselströme. Der Gleichrichter 34 ist zweckmäßigerweise dazu eingerichtet, aus dem Zugstrom I_Zug einen im Wesentlichen konstanten Versorgungstrom I_V zu formen. Mit diesem Gleichstrom lassen sich, gegebenenfalls auch anteilig, der nicht dargestellte Antrieb betreiben und die Batterie 22 Laden.

Zum Laden der Batterie 22 stellt der DC/DC-Steller 36, z. B. auf Veranlassung der Steuerungsvorrichtung 38, einen auch als "Batteriestrom" bezeichneten Ladestrom I_N an der Batterie 22, und damit auch eine Ladeleistung P_N, ein.

Dabei ist die Steuerungsvorrichtung 38 vorzugsweise dazu eingerichtet, ein Ladeleistungsniveau P_L festzulegen und eine Modulation der sich auf dem Ladeleistungsniveau befindlichen Ladeleistung P_N mit wenigstens einer vorbestimmten Frequenz zu bewirken.

Da die Spannung an der Batterie 22 im Wesentlichen konstant ist, kann die Ladeleistung P_N durch eine Modulation des Ladestroms I_N moduliert werden. Die Steuerungsvorrichtung 36 kann also beispielsweise dazu eingerichtet sein, den DC/DC-Steller 36 dazu zu veranlassen, den Versorgungstrom I_V oder einen Teil I_L davon derart zu modulieren, dass

$$I\_N = I\_L + I\_M \cdot \sin(2 \cdot \pi \cdot f)$$

mit I_L = konstanter Ladestromanteil, welcher mit dem festgelegten Ladeleistungsniveau korrespondiert, I_M = aufmodulierter Strom, der maximal etwa 4 %, vorzugsweise maximal 2 % des konstanten Ladestromanteils I_L beträgt und f = vorbestimmte Frequenz.

Alternativ oder zusätzlich dazu ist die Steuerungsvorrichtung 38 dazu eingerichtet, eine Frequenzanalyse im Ladestromnetz 12 durchzuführen. Zudem kann die Steuerungsvorrichtung 38 auf Grundlage der Frequenzanalyse das Ladeleistungsniveau P_L festlegen. Zur Durchführung der Frequenzanalyse im Ladestromnetz 12, beispielsweise dem Ermitteln von Frequenzen der Spannung im Ladestromnetz 12, kann die Steuerungsvorrichtung 38 eine Strommessung am Netzanschluss 24, insbesondere am Stromabnehmer 30, durch geeignete Sensoren veranlassen und diese auswerten.

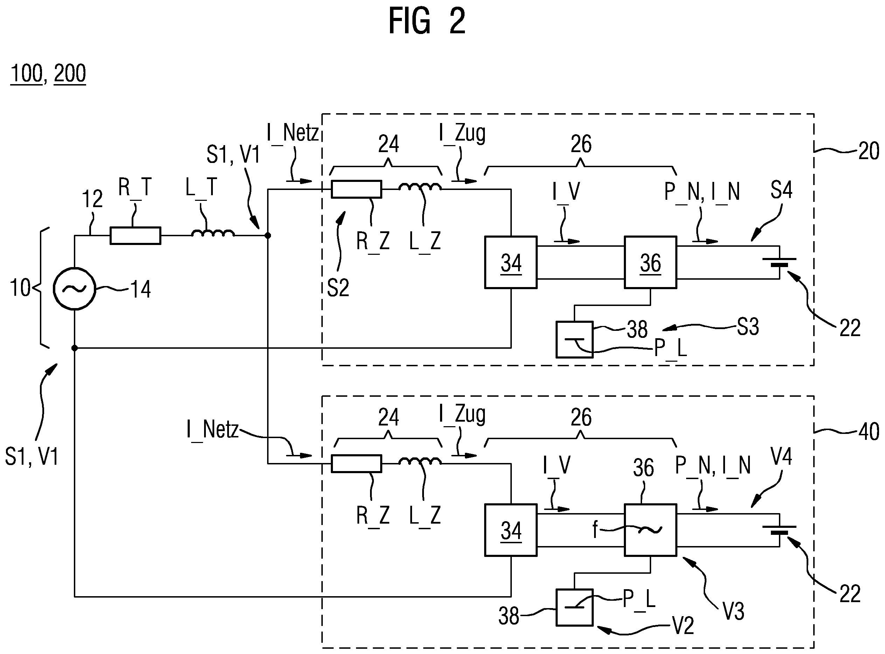

FIG 2 zeigt ein Beispiel von zwei Verfahren 100, 200 zum Laden einer Batterie 22 eines Schienenfahrzeugs 20, 40 anhand eines schematischen Ersatzschaltbildes.

In einem Verfahrensschritt S1 des einen Verfahrens 100 wird das obere schematisch dargestellte Schienenfahrzeug 20 mit einer Ladestation 10 elektrisch verbunden, z. B. indem ein Netzanschluss 24 des Schienenfahrzeugs 20 an ein Ladestromnetz 12 der Ladestation angeschlossen wird. Das Ladestromnetz 12, symbolisiert durch einen Widerstand R_T und eine Induktivität L_T, wird zweckmäßigerweise über einem Netztransformator 14 gespeist. So kann ein aus einem Netzstrom I_Netz vom Zugtransformator 32, symbolisiert durch einen Widerstand R_Z und eine Induktivität L_Z, transformierter Zugstrom I_Zug einer Wandleranordnung 26 bereitgestellt werden. Der Zugstrom I_Zug wird mittels der Wandleranordnung 26, insbesondere eines Gleichrichters 34 bzw. Vierquadrantenstellers, in einen als "Versorgungstrom" I_V bezeichneten Gleichstrom gewandelt.

In einem weiteren Verfahrensschritt S2 wird eine Frequenzanalyse im Ladestromnetz 12 durchgeführt. Dazu kann beispielsweise eine Spannungsmessung am Netzanschluss 24 vorgenommen werden. Die Frequenzanalyse in Verfahrensschritt S2 kann dann beispielsweise mittels einer Fourier-Analyse der Spannungsmessung erfolgen. Das Ergebnis der Frequenzanalyse ist zweckmäßigerweise ein Frequenzspektrum, das neben der Netzfrequenz des Versorgungsnetzes 12 von beispielsweise 50 Hz weitere Frequenzspitzen bei Frequenzen oberhalb und unterhalb der Netzfrequenz aufweisen kann. Diese zusätzlichen Frequenzen treten als Seitenbänder der Netzfrequenz auf. Die zusätzlichen Frequenzen können der Netzspannung im Ladestromnetz 12 durch andere Schienenfahrzeuge 40 aufgeprägt sein, wie im Folgenden erläutert wird.

Auf Grundlage der so durchgeführten Frequenzanalyse kann in einem weiteren Verfahrensschritt S3 ein Ladeleistungsniveau P_L festgelegt werden, etwa mittels einer entsprechend konfigurierten Steuerungsvorrichtung 38. Das Ladeleistungsniveau P_L kann sich also beispielsweise danach richten, wie viele andere Schienenfahrzeuge 40 aktuell ebenfalls mit einem Netzstrom I_Netz aus dem Ladestromnetz 12 eine Batterie 22 laden, und aufgrund einer jeweiligen Modulation des Ladestroms zumindest ein jeweiliges Paar zusätzlicher Seitenbänder im Frequenzspektrum bewirken.

Gegebenenfalls kann im Rahmen des Verfahrensschritt S3 das Ladestromnetz 12 über einen längeren Zeitraum, insbesondere über die gesamte Ladedauer, überwacht werden, um Änderungen im Frequenzspektrum zu ermitteln. Dementsprechend kann das Ladeleistungsniveau P_L im Laufe des Ladevorgangs geändert, z. B. an eine geänderte Ladesituation an der Ladestation 10, angepasst werden. Alternativ oder zusätzlich können mithilfe des sich ändernden Frequenzspektrums auch komplexere Informationen entschlüsselt werden, die eine noch differenziertere Steuerung des Ladevorgangs durch die Steuervorrichtung 38 erlauben. Beispiele hierfür sind etwa der Ladezustand anderer Schienenfahrzeuge 40, etwa deren jeweiliger Ladezustand sowie etwaige Ladepläne, welche insbesondere eine maximal mögliche Ladedauer aufgrund einer bevorstehenden Abfahrt vorgeben.

In einem weiteren Verfahrensschritt S4 wird schließlich die Batterie 22 mit einer Ladeleistung P_N geladen, die sich im Wesentlichen auf dem Ladeleistungsniveau P_L befindet. Die Ladeleistung P_N ergibt sich dabei zweckmäßigerweise aus einem Ladestrom I_N, der von einem DC/DC-Steller 36 der Wandleranordnung 26 auf Grundlage des Versorgungstroms I_V zum Laden der Batterie 22 bereitgestellt wird.

Bei dem anderen in der FIG 2 dargestellten Verfahren 200 wird in einem Verfahrensschritt V1 das untere schematisch dargestellte Schienenfahrzeug 40 mit dem Ladestromnetz 12 elektrisch verbunden.

In einem weiteren Verfahrensschritt V2 wird, z. B. von der Steuerungsvorrichtung 38, das Ladeleistungsniveau P_L festgelegt. Dabei ist es bevorzugt, dass die Festlegung analog zum Verfahrensschritt S3 des Verfahrens 100 auf Grundlage einer durchgeführten Frequenzanalyse im Ladestromnetz 12 erfolgt. Für das Verfahren 200 ist dies jedoch nicht zwingend. Bedeutend ist vielmehr, dass in einem weiteren Verfahrensschritt V3 eine sich im Wesentlichen auf dem festgelegten Ladeleistungsniveau befindliche Ladeleistung P_N mit wenigstens einer vorbestimmten Frequenz f moduliert wird. Zu diesem Zweck kann die Steuerungsvorrichtung 38 den DC/DC-Steller 36 bzw. deren Leistungshalbleiterschalter entsprechend ansteuern, dass diese eine Modulation des Ladestroms I_N bewirken. Diese Modulation kann beispielsweise sinusförmig sein.

Die modulierten Ladeleistung P_N kann beispielsweise erhalten werden, indem einem mit dem Ladeleistungsniveau P_L korrespondierenden konstanten Ladestrom I_L, etwa dem Versorgungsstrom I_V oder einem Teil davon, ein vergleichsweise kleiner Strom aufmoduliert wird.

Durch die Modulation des Batterie- bzw. Ladestroms I_N ergibt sich ein geringfügig schwankender Leistungsbedarf. Die Modulation des Ladestroms I_N mit der vorbestimmten Frequenz f pflanzt sich infolgedessen bis in das Ladestromnetz 12 fort. Zunächst bewirkt die Modulation des Ladestroms I_N eine entsprechende Schwankung des Versorgungstroms I_V in dem Gleichspannungszwischenkreis der Wandleranordnung 26. Der mit der Frequenz f schwankende Versorgungstrom I_V in der Wandleranordnung 26 führt wiederum zu einem schwankenden Zugstrom I_Zug auf der Netzseite des Zugtransformators und somit zu einer Schwankung des Stroms am Stromabnehmer, d. h. des Netzstroms I_Netz. Der mit der Frequenz f schwankende Netzstrom I_Netz führt aufgrund der Netzimpedanz, symbolisiert durch einen Sekundärwiderstand R_T und eine sekundäre Streuinduktivität L_T, des Ladestromnetzes 12 schließlich zu einer Spannungsmodulation.

Diese hat zwar eine kleine Amplitude, kann allerdings im Frequenzspektrum, etwa im Rahmen des voranstehend beschriebenen Verfahrens 100, eindeutig identifiziert werden.

In einem weiteren Verfahrensschritt V4 wird die Batterie 22 des Schienenfahrzeugs 40 schließlich mit der modulierten Ladeleistung P_N geladen.

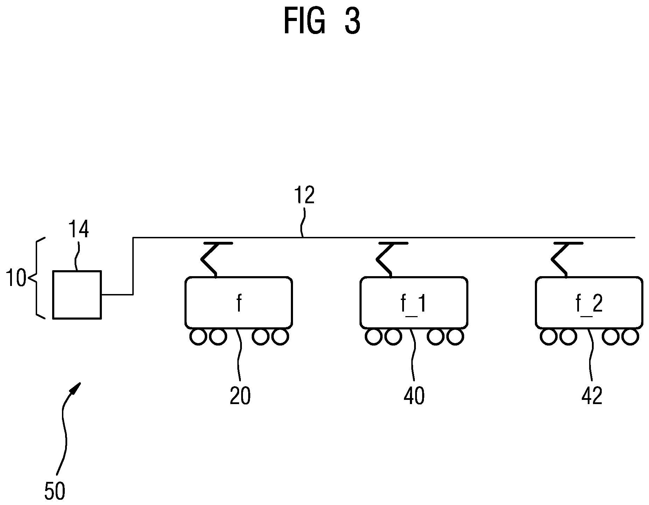

FIG 3 zeigt schematisch ein System 50 mit einer Ladestation 10 und einem Schienenfahrzeug 20, dass zur Kommunikation mit anderen Schienenfahrzeugen 40, 42 und/oder der Ladestation 10 über ein von einem Netztransformator 14 versorgten Ladestromnetz 12 der Ladestation 10 eingerichtet ist. Zum Zwecke dieser Kommunikation ist jedes der Schienenfahrzeuge 20, 40, 42 zweckmäßigerweise dazu eingerichtet, eine Ladeleistung zum Laden einer Batterie des jeweiligen Schienenfahrzeugs 20, 40, 42 mit einer dem jeweiligen Schienenfahrzeug 20, 40, 42 zugeordneten Frequenz f, f_1, f_2 zu modulieren. Wie voranstehend bezüglich der FIG 2 beschrieben, kann jedes der Schienenfahrzeuge 20, 40, 42 und/oder die Ladestation 10 durch eine Frequenzanalyse im Ladestromnetz 12 die Anwesenheit der jeweils anderen Schienenfahrzeuge völlig autark erkennen und so die für das jeweilige Schienenfahrzeug 20, 40, 42 zur Verfügung stehende Ladeleistung individuell bestimmen.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1.  Verfahren (100) zum Laden zumindest einer Batterie (22) eines Schienenfahrzeugs (20) an einer Ladestation (10), aufweisend:

    - elektrisches Verbinden (S1) des Schienenfahrzeugs (20) mit einem Ladestromnetz (12) der Ladestation (10),
    - Durchführen (S2) einer Frequenzanalyse im Ladestromnetz (12);
    - Festlegen (S3) eines Ladeleistungsniveaus (P_L) auf Grundlage der Frequenzanalyse, und
    - Laden (S4) der Batterie (22) mit einer Ladeleistung (P_N), die sich im Wesentlichen auf dem festgelegten Ladeleistungsniveau (P_L) befindet.

2.  Verfahren (100) nach Anspruch 1, wobei bei der Frequenzanalyse Modulationsfrequenzen innerhalb des Ladestromnetzes (12) ermittelt werden und die Festlegung des Ladeleistungsniveaus (P_L) auf Grundlage der ermittelten Modulationsfrequenzen erfolgt.

3.  Verfahren (100) nach Anspruch 2, wobei eine Anzahl an Modulationsfrequenzen im Ladestromnetz (12) ermittelt und das Ladeleistungsniveau (P_L) festgelegt wird, indem eine vorbestimmte Lade-Maximalleistung der Ladestation (10) durch eine Zahl dividiert wird, die auf der Anzahl der ermittelten Modulationsfrequenzen basiert.

4.  Verfahren (100) nach einem der vorangehenden Ansprüche, wobei
beim Durchführen der Frequenzanalyse die Frequenzen von Spannungsschwankungen im Ladestromnetz (12) ermittelt werden.

5. Verfahren (100) nach einem der vorangehenden Ansprüche, wobei
dem Festlegen des Ladeleistungsniveaus (P_L) eine Ladeinformation zugrunde gelegt wird, welche auf Grundlage einer zeitlichen Änderung des Frequenzspektrums im Ladestromnetz (12) ermittelt wird.

6. Verfahren (100) nach Anspruch 5, wobei
die Ladeinformation ein dem Schienenfahrzeug (20) von der Ladestation (10) zugeteiltes Ladeleistungsniveau (P_L) enthält.

7. Verfahren (100) nach Anspruch 5 oder 6, wobei
die Ladeinformation einen Ladezustand zumindest eines anderen, elektrisch mit dem Ladestromnetz (12) verbundenen Schienenfahrzeugs (40, 42) enthält.

8. Verfahren (200) zum Laden einer Batterie (22) eines Schienenfahrzeugs (20; 40) an einer Ladestation (10), umfassend die Schritte:

- elektrisches Verbinden (V1) des Schienenfahrzeugs (20; 40) mit einem Ladestromnetz (12) der Ladestation (10),
- Festlegen (V2; S3) eines Ladeleistungsniveaus (P_L),
- Modulieren (V3) einer sich im Wesentlichen auf dem Ladeleistungsniveaus (P_L) befindlichen Ladeleistung (P_N) mit wenigstens einer vorbestimmten Frequenz (f), und
- Laden (V4) der Batterie (22) mit der modulierten Ladeleistung (P_N).

9. Verfahren (200) nach Anspruch 8, wobei
die Ladeleistung (P_N) derart moduliert wird, dass eine Information betreffend eine Identität des Schienenfahrzeugs (20; 40), einen Ladeplan des Schienenfahrzeugs (20; 40), insbesondere eine maximale Ladedauer, einen Ladzustand und/oder eine benötigte Mindestenergiemenge im Ladestromnetz (12) bereitgestellt wird.

10. Schienenfahrzeug (20), umfassend

- zumindest eine Batterie (22),
- einen Netzanschluss (24) zum Verbinden des Schienenfahrzeugs (20) mit einem Ladestromnetz (12) einer Ladestation (10),
- eine Wandleranordnung (26), welche den Netzanschluss (24) mit der Batterie (22) elektrisch koppelt und zum Bereitstellen einer Ladeleistung (P_N) für die Batterie (22) eingerichtet ist, und
- eine Steuerungsvorrichtung (38), die dazu eingerichtet ist, eine Frequenzanalyse im Ladestromnetz (12) durchzuführen, auf Grundlage der Frequenzanalyse ein Ladeleistungsniveau (P_L) festzulegen und ein Laden der Batterie (22) mit einer Ladeleistung (P_N), die sich im Wesentlichen auf dem festgelegten Ladeleistungsniveau (P_L) befindet, zu laden.

11. Schienenfahrzeug (20; 40), umfassend

- eine Batterie (22),
- einen Netzanschluss (24) zum Verbinden des Schienenfahrzeugs (20; 40) mit einem Ladestromnetz (12) einer Ladestation (10),
- eine Wandleranordnung (26), welche den Netzanschluss (24) mit der Batterie (22) elektrisch koppelt und zum Bereitstellen einer Ladeleistung (P_N) für die Batterie (22) eingerichtet ist, und
- eine Steuerungsvorrichtung (38), die dazu eingerichtet ist, ein Ladeleistungsniveau (P_L) festzulegen und eine sich im Wesentlichen auf dem Ladeleistungsniveau (P_L) befindliche Ladeleistung (P_N) mit wenigstens einer vorbestimmten Frequenz (f) zu modulieren.

12. System (50) umfassend eine Ladestation (10) und ein Fahrzeug (20, 40, 42) nach Anspruch 9 oder 10, wobei die Ladestation (10) dazu eingerichtet ist, eine Frequenzanalyse in einem Ladestromnetz (12) der Ladestation (10) durchzuführen und/oder eine Netzspannung im Ladestromnetz (12) mit wenigstens einer vorbestimmten Frequenz (f) zu modulieren.

# FIG 1

FIG 2

100, 200

EP 4 711 186 A1

# FIG 3

Europäisches
Patentamt

European
Patent Office

Office européen
des brevets

**EUROPÄISCHER RECHERCHENBERICHT**

Nummer der Anmeldung

EP 25 19 1153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 125849 A1 (ZF CV SYSTEMS GLOBAL GMBH [CH]) 7. April 2022 (2022-04-07) * Absatz [0008] - Absatz [0037] * * Absatz [0039] - Absatz [0045]; Abbildung 1 * | 1-12 | INV. B60L50/53 B60L53/62 B60L53/63 B60L53/65 H02J3/17 |
| X A | DE 10 2013 206840 A1 (SIEMENS AG [DE]) 16. Oktober 2014 (2014-10-16) * Absatz [0004] - Absatz [0024] * * Absatz [0028] - Absatz [0029]; Abbildungen 1-3 * | 1,4 2,3,5-12 | H02J13/13 H02J7/40 |
| A | DE 10 2021 206825 A1 (SIEMENS MOBILITY GMBH [DE]) 5. Januar 2023 (2023-01-05) * Absatz [0004] - Absatz [0017] * * Absatz [0051] - Absatz [0054]; Abbildung 1 * | 1-12 | |
| A | DE 10 2009 008549 A1 (BOMBARDIER TRANSP GMBH [DE]) 19. August 2010 (2010-08-19) * Absatz [0001] - Absatz [0011] * * Absatz [0054] - Absatz [0055]; Abbildungen 1-2 * | 1-12 | RECHERCHIERTE SACHGEBIETE (IPC) B60L H02J |
| A | US 2014/012446 A1 (KUMAR AJITH KUTTANNAIR [US] ET AL) 9. Januar 2014 (2014-01-09) * Absatz [0005] - Absatz [0008] * * Absatz [0029] - Absatz [0039]; Abbildung 1 * | 1-12 | |
| A | US 2011/030574 A1 (KITANAKA HIDETOSHI [JP]) 10. Februar 2011 (2011-02-10) * Absatz [0007] - Absatz [0011] * * Absatz [0060] - Absatz [0061]; Abbildung 2 * | 1-12 | |

Der vorliegende Recherchenbericht wurde für alle Patentansprüche erstellt

| Recherchenort | Abschlußdatum der Recherche | Prüfer |
|---|---|---|
| Den Haag | 22. Januar 2026 | Prohaska, Miroslava |

**ANHANG ZUM EUROPÄISCHEN RECHERCHENBERICHT
ÜBER DIE EUROPÄISCHE PATENTANMELDUNG NR.**

EP 25 19 1153

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2026

| Im Recherchenbericht angeführtes Patentdokument | Datum der Veröffentlichung | Mitglied(er) der Patentfamilie | Datum der Veröffentlichung |
|---|---|---|---|
| DE 102020125849 A1 | 07-04-2022 | CN 116194324 A | 30-05-2023 |
| | | DE 102020125849 A1 | 07-04-2022 |
| | | EP 4222013 A1 | 09-08-2023 |
| | | US 2023202337 A1 | 29-06-2023 |
| | | WO 2022069351 A1 | 07-04-2022 |
| DE 102013206840 A1 | 16-10-2014 | KEINE | |
| DE 102021206825 A1 | 05-01-2023 | CN 218975273 U | 05-05-2023 |
| | | DE 102021206825 A1 | 05-01-2023 |
| | | EP 4112356 A1 | 04-01-2023 |
| | | ES 3010578 T3 | 03-04-2025 |
| | | US 2023001960 A1 | 05-01-2023 |
| DE 102009008549 A1 | 19-08-2010 | DE 102009008549 A1 | 19-08-2010 |
| | | EP 2396188 A1 | 21-12-2011 |
| | | ES 2675094 T3 | 06-07-2018 |
| | | PL 2396188 T3 | 28-09-2018 |
| | | US 2011316333 A1 | 29-12-2011 |
| | | WO 2010091899 A1 | 19-08-2010 |
| US 2014012446 A1 | 09-01-2014 | CN 104411535 A | 11-03-2015 |
| | | JP 6266612 B2 | 24-01-2018 |
| | | JP 2016508358 A | 17-03-2016 |
| | | US 2014012446 A1 | 09-01-2014 |
| | | WO 2014008114 A2 | 09-01-2014 |
| US 2011030574 A1 | 10-02-2011 | CA 2725409 A1 | 05-11-2009 |
| | | CN 102015356 A | 13-04-2011 |
| | | EP 2275300 A1 | 19-01-2011 |
| | | JP 4346678 B1 | 21-10-2009 |
| | | JP WO2009133608 A1 | 25-08-2011 |
| | | KR 20110004402 A | 13-01-2011 |
| | | US 2011030574 A1 | 10-02-2011 |
| | | WO 2009133608 A1 | 05-11-2009 |

EPO FORM P0461

Für nähere Einzelheiten zu diesem Anhang : siehe Amtsblatt des Europäischen Patentamts, Nr.12/82